# EUROPÄISCHE PATENTSCHRIFT

(11) **EP 3 767 116 B1**
(45) Veröffentlichungstag und Bekanntmachung des Hinweises auf die Patenterteilung: **20.04.2022**
(21) Anmeldenummer: 20185610.1
(22) Anmeldetag: 14.07.2020
(51) Int. Cl.: F16C 3/02, F03B 13/26, F03B 17/06, F03B 11/00, F03B 11/06

(54) **ROTORWELLENEINHEIT**
ROTOR SHAFT UNIT
UNITÉ D'ARBRE DE ROTOR

(30) Priorität: 16.07.2019 DE 102019210482
(43) Veröffentlichungstag der Anmeldung: 20.01.2021
(73) Patentinhaber: Aktiebolaget SKF, 415 50 Göteborg (SE)
(72) Erfinder: Baumann, Michael, 97503 Gädheim (DE); Hofmann, Matthias, 97422 Schweinfurt (DE)
(74) Vertreter: Kuhstrebe, Jochen

(56) Entgegenhaltungen:
- DE-A1- 3 248 097
- DE-C1- 3 635 203
- US-A- 3 388 880
- US-A1- 2012 200 084

## Beschreibung

Vorliegende Erfindung betrifft eine Rotorwelleneinheit für eine Gezeitenanlage gemäß dem Oberbegriff von Patentanspruch 1.

In Energieanlagen wie beispielsweise Windenergieanlagen werden stationäre Rotorwellen als Achszapfen verwendet, um einen Rotor drehbar zu lagern. Die Rotorwelle ist dabei üblicherweise mit einer oder mehreren Lagereinheiten in einem Gehäuse gelagert, wobei das Gehäuse mit einem Rotor der Gezeitenanlage verbunden ist. An dem anderen Ende der Rotorwelle ist die Rotorwelle fest mit einem Hauptrahmen der Gezeitenanlage verbunden. Eine Verbindung der Rotorwelle mit dem Hauptrahmen kann über eine Rotorwellenflanschverbindung erzeugt werden. Allerdings ist eine solche Verbindung teuer in der Herstellung und die Montage und vor allem Demontage der Rotorwelle ist aufwändig. Des Weiteren wäre bei einer solchen Flanschverbindung in einer Gezeitenanlage ein Zugriff auf eine Dichteinheit, die um die Rotorwelle angeordnet ist, um die eine oder mehreren Lagereinheiten in Richtung des Hauptrahmens abzudichten, schwierig. Eine Wartung der Dichteinheit wäre daher ebenfalls sehr aufwändig.

Es ist deshalb Aufgabe vorliegender Erfindung, eine Rotorwelleneinheit bereitzustellen, die einfach an einem Hauptrahmen einer Gezeitenanlage montiert und bei Bedarf demontiert werden kann.

Diese Aufgabe wird durch eine Rotorwelleneinheit für eine Gezeitenanlage gemäß Patentanspruch 1 gelöst. Eine Rotorwelleneinheit mit den Merkmalen des Oberbegriffs des Anspruchs 1 ist aus der US 2012/200084 A1 bekannt.

Die Rotorwelleneinheit weist eine Rotorwelle, die dazu ausgebildet ist, mit einem Hauptrahmen der Gezeitenanlage verbunden zu werden, und zumindest eine Lagereinheit zum Lagern der Rotorwelle in einem Gehäuse auf, wobei das Gehäuse dazu ausgebildet ist, mit einem Rotor der Gezeitenanlage verbunden zu werden. Statt die Rotorwelle mittels einer bekannten Flanschverbindung mit dem Hauptrahmen zu verbinden, ist gemäß der hier vorgeschlagenen Rotorwelleneinheit eine Hülse vorgesehen, die um die Rotorwelle angeordnet und an dem Hauptrahmen befestigt ist. Eine Verbindung der Hülse mit der Rotorwelle erfolgt dabei durch einen Reibschluss.

Da statt einer Flanschverbindung die Hülse zur Befestigung der Rotorwelle an dem Hauptrahmen des Generators verwendet wird, gibt es keine feste Flanschverbindung zwischen Rotorwelle und Hauptrahmen und damit kann die Rotorwelle einfach aus der Hülse, die in dem Hauptrahmen bleibt, oder zusammen mit der Hülse aus dem Hauptrahmen herausgezogen werden, um beispielsweise eine Dichteinheit an der Rotorwelle auszutauschen. Dies bietet des Weiteren den Vorteil, dass die Rotorwelle aus einem zylindrischen Stahlrohr hergestellt werden kann, und es nicht erforderlich ist, einen Flansch an der Rotorwelle herzustellen bzw. anzuschweißen. Die Verbindung zwischen der Rotorwelle und der Hülse erfolgt lediglich durch den Reibschluss, ohne dass weitere Befestigungsmittel erforderlich sind.

Gemäß einer Ausführungsform wird die Hülse zunächst in eine Bohrung des Hauptrahmens eingeschoben. Anschließend wird die Rotorwelle in die Hülse eingeführt. Dabei wird die Hülse in dem Hauptrahmen über einen Reibschluss und die Rotorwelle in der Hülse ebenfalls über einen Reibschluss gehalten.

Der Reibschluss kann beispielsweise durch einen Kegelsitz zwischen der Hülse und der Rotorwelle oder ein Verklemmen der Rotorwelle mit der Hülse erreicht werden. Andere Arten von Reib- bzw. Kraftschluss sind ebenfalls möglich.

Um einen Kegelsitz zwischen Rotorwelle und Hülse zu erreichen, kann gemäß einer weiteren Ausführungsform der Außenumfang der Rotorwelle konisch ausgebildet und/oder die Innenbohrung der Hülse kann konisch ausgebildet sein. Durch die konische Ausbildung der Rotorwelle und/oder der Hülse kann die Hülse einfach auf die Rotorwelle aufgeschoben werden und durch einen Kegelsitz gesichert werden.

Gemäß einer weiteren Ausführungsform ist der Außenumfang der Hülse zylindrisch ausgebildet. Die Bohrung des Hauptrahmens, in die die Hülse eingeschoben wird, kann dabei auch zylindrisch ausgebildet sein. Durch das Aufschieben der Hülse auf die Rotorwelle, bzw. das Einschieben der Rotorwelle in die Hülse, wird die Hülse durch den Kegelsitz an der Rotorwelle befestigt und gleichzeitig etwas ausgedehnt und dadurch in der Bohrung des Hauptrahmens gesichert. Alternativ oder zusätzlich kann die Hülse durch das Einführen der Rotorwelle in die Hülse weiter in die Bohrung des Hauptrahmens geschoben und dadurch dort verklemmt werden.

Der Reibschluss kann somit durch einen Kegelsitz zwischen der Hülse und der Rotorwelle, aber alternativ auch durch einen Kegelsitz zwischen der Hülse und dem Hauptrahmen erreicht werden. Im ersteren Fall ist die Rotorwelle und der Innenumfang der Hülse konisch ausgeführt und der Außenumfang der Hülse und der Innumfang der Bohrung zylindrisch ausgeführt. Im zweiten Fall ist die Rotorwelle und der Innenumfang der Hülse zylindrisch ausgeführt und der Außenumfang der Hülse und der Innumfang der Bohrung konisch als Kegelsitz ausgeführt. Bei beiden Varianten wird ein Verklemmen der Rotorwelle mittels der Hülse erreicht. Andere Arten von Reib- bzw. Kraftschluss sind ebenfalls möglich.

Alternativ kann die Hülse auch zweiteilig ausgeführt sein und aus zwei ineinanderliegenden Teilhülsen bestehen, wobei der Außenumfang der inneren Hülse und der Innenumfang der äußeren Hülse zusammen einen konischen Kegelsitz bilden und der Innenumfang der inneren Hülse und der Außenumfang der äußeren Hülse zylindrisch ausgeführt sind. In diesem Fall können die Rotorwelle und die Bohrung im Gehäuse beide ebenfalls zylindrisch ausgebildet sein. Ein Pressverband wird in diesem Fall durch eine axiale Verschiebung der beiden Hülsen relativ zueinander erzielt. In allen Fällen wird eine Verbindung der Rotorwelle mit dem Gehäuse über einen Kegelsitz erreicht, welcher den Reibschluss zwischen der Rotorwelle und der Hülse bewirkt.

Gemäß einer weiteren Ausführungsform ist an einem Ende der Hülse eine hydraulische Mutter zum Erzeugen des Reibschlusses vorgesehen. Die hydraulische Mutter kann über einen Verbindungsschlauch mit Druck beaufschlagt werden, der die Hülse axial auf die Rotorwelle schiebt. Beispielsweise kann die Hülse, wenn sie bereits in die Bohrung des Hauptrahmens angeordnet ist, durch die hydraulische Mutter ein Stück aus dem Hauptrahmen und auf die Rotorwelle geschoben werden.

Durch den Druck, der durch die hydraulische Mutter auf die Hülse ausgeübt wird, wird die Hülse axial mit einem genau bestimmten Druck auf die Rotorwelle gedrückt. Durch diesen Kontaktdruck zwischen der Rotorwelle und der Hülse wird auch die Verbindung zwischen der zylindrischen Außenfläche der Hülse und der Bohrung des Hauptrahmens erzeugt.

Der Kontaktdruck stellt daher sowohl eine zuverlässige Verbindung zwischen der Rotorwelle und der Hülse als auch der Hülse und dem Hauptrahmen sicher. Auf diese Weise ist die Rotorwelle sicher und zuverlässig an dem Hauptrahmen befestigt.

Um die Rotorwelle und die Hülse wieder voneinander lösen zu können, kann gemäß einer weiteren Ausführungsform eine Ölnut zwischen der Rotorwelle und der Hülse vorgesehen sein. Die Ölnut kann entweder in der Rotorwelle oder in der Hülse oder in beiden implementiert werden. Um die Hülse und die Rotorwelle voneinander zu lösen, kann Öl in die Ölnut eingeführt werden, um einen Gleitfilm zwischen der Rotorwelle und der Hülse zu schaffen. Durch diesen Gleitfilm kann der Reibschluss aufgehoben werden, wobei die Rotorwelle und die Hülse auf dem Gleitfilm einfach gegeneinander verschoben und dadurch voneinander gelöst werden können. Bevorzugt wird zunächst der Druck, der durch die hydraulische Mutter ausgeübt wird, gelöst.

Gemäß einer Ausführungsform weist die Rotorwelleneinheit zumindest eine Dichteinheit auf, die um die Rotorwelle angeordnet ist und zum Abdichten der Lagereinheit in Richtung des Hauptrahmens ausgebildet ist. Die Hülse kann axial zwischen der Dichteinheit und dem Hauptrahmen angeordnet sein. Wird die Hülse für den Reibschluss in axialer Richtung auf die Rotorwelle geschoben oder die Rotorwelle in die Hülse, kann die Hülse in Anschlag an die Dichteinheit kommen und so einen Druck in axialer Richtung auf die Dichteinheit ausüben. Auf diese Weise ist durch die Hülse eine axiale Absicherung der Dichteinheit möglich.

Ein Lösen der Rotorwelle und der Hülse voneinander kann beispielsweise erforderlich sein, wenn die Dichteinheit, die die Lagereinheit in Richtung des Hauptrahmens abdichtet, beschädigt ist und ausgetauscht werden soll. Die Dichteinheit kann als gesamtes Modul ausgetauscht werden oder die Dichteinheit kann mehrere Dichtungsträgerringe mit jeweils einer Dichtlippe aufweisen, wobei die Dichtungsträgerringe einzeln austauschbar sind. Indem die Rotorwelle von der Hülse gelöst und aus der Hülse gezogen wird, ist ein einfacher Zugriff auf die Dichteinheit möglich, um diese auszutauschen. Die Dichteinheit kann axial als Ganzes von der Rotorwelle gezogen werden, da die Rotorwelle in Abziehrichtung der Dichteinheit an keiner Stelle einen größeren Durchmesser aufweist als der Innendurchmesser der Dichteinheit misst. Dies wird durch die spezielle Anordnung der Hülse erreicht.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigt:

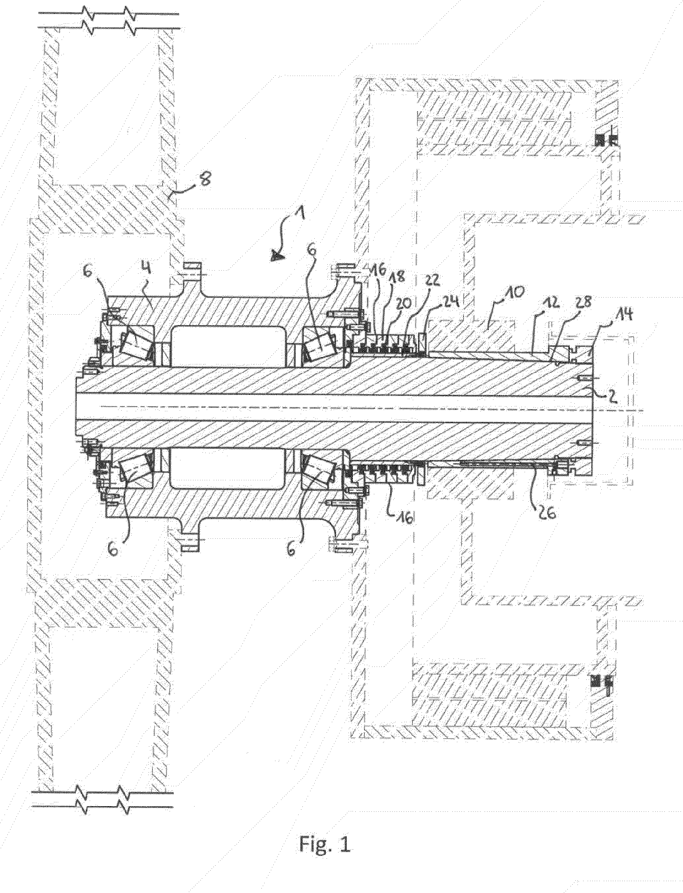

- Fig. 1:: einen Längsschnitt einer Rotorwelleneinheit.

Im Folgenden werden gleiche oder funktionell gleichwirkende Elemente mit denselben Bezugszeichen gekennzeichnet.

Fig. 1 zeigt einen Längsschnitt einer Rotorwelleneinheit 1 für eine Gezeitenanlage. Die Rotorwelleneinheit 1 weist eine Rotorwelle 2 auf, die in einem Gehäuse 4 über Lagereinheiten 6 gelagert ist. Das Gehäuse 4 ist mit einem Rotor 8 der Gezeitenanlage verbunden. Die Rotorwelle 2 ist stationär und an einem Hauptrahmen 10 der Gezeitenanlage befestigt. Um eine einfache und flexible Befestigung der Rotorwelle 2 an dem Hauptrahmen 10 zu ermöglichen, ist eine Hülse 12 in einer Bohrung des Hauptrahmens 10 angeordnet. Die Rotorwelle 2 wird in diese Hülse 12 eingeschoben und die Hülse 12 und die Rotorwelle 2 sind durch einen Reibschluss miteinander verbunden. In der hier gezeigten Ausführungsform wird der Reibschluss durch einen Kegelsitz realisiert.

Wie in Fig. 1 dargestellt ist, weisen der Außenumfang der Rotorwelle 2 und der Innendurchmesser der Hülse 12 jeweils einen konischen Verlauf auf. Andere Formen sind ebenfalls möglich. Zum Befestigen der Hülse 12 und der Rotorwelle 2 aneinander ist eine hydraulische Mutter 14 vorgesehen. Diese dient zusätzlich dazu, die Hülse 12 axial zu sichern.

Zum Befestigen der Rotorwelle 2 an dem Hauptrahmen 10 wird zunächst die Hülse 12 in den Hauptrahmen 10 eingeschoben. Anschließend wird die Rotorwelle 2 in die Hülse 12 eingeschoben. Dann wird die Hydraulikmutter 14 mit einem Druck beaufschlagt, wobei der Druck die Hülse 12 in Richtung der Rotorwelle 2, d. h. in der Figur nach links, drückt. Auf diese Weise wird der Reibschluss zwischen der Rotorwelle 2 und der Hülse 12 hergestellt. Die Hülse 12 wird dabei wieder etwas aus dem Hauptrahmen 10 herausgeschoben.

Die Hülse 12 weist einen Außenumfang auf, der zylindrisch ist und in der Bohrung des Hauptrahmens 10 angeordnet ist. Durch das Aufschieben der Hülse 12 auf die Rotorwelle 2 wird die Hülse etwas ausgeweitet, und sitzt dadurch ebenfalls durch Reibschluss fest in dem Hauptrahmen 10.

Zur Abdichtung der Lagereinheiten 6 ist zwischen der Hülse 12 und dem Gehäuse 4 eine Dichteinheit 16 vorgesehen. Diese Dichteinheit weist mehrere Dichtungsträgerringe 18 auf, die jeweils eine Dichtlippe 20 aufweisen. Die Dichtlippen 20 laufen auf einer Scheibe 22, die um die Rotorwelle 2 angeordnet ist. Alternativ kann die Dichtscheibe 22 auch durch die Rotorwelle 2 selbst implementiert sein. Die Hülse 12 drückt, wenn die Rotorwelle 2 in die Hülse 12 eingeschoben ist, gegen die Dichteinheit 16, oder gegen eine Schutzanode 24, die an der Dichteinheit 16 angeordnet ist. Durch die Hülse 12 wird also zusätzlich auch die Dichteinheit 16 in axialer Richtung gesichert, da diese durch den axialen Druck der hydraulischen Mutter 14 an die Dichteinheit 16 anstößt.

Zur Montage der gesamten Rotorwelleneinheit 1 werden zunächst die Lagereinheiten 6 und das Gehäuse 4, sowie die zugehörigen Dichteinheiten 6 an der Rotorwelle 2 befestigt. Anschließend wird die Rotorwelle 2 als gesamte Rotorwelleneinheit 1 an dem Hauptrahmen 10 durch Einschieben der Rotorwelle 2 in die Hülse 12 befestigt.

Zur Demontage der Rotorwelleneinheit 1 von dem Hauptrahmen 10 kann in der Rotorwelle 2 oder in der Hülse 12 oder in beiden eine Ölnut 26 (in Fig. 1 in der Hülse 12 implementiert) vorgesehen sein. In die Ölnut 26 kann Öl eingebracht werden, um einen Gleitfilm in dem Bereich 28 zwischen der Hülse 12 und der Rotorwelle 2 zu erzeugen. Durch diesen Gleitfilm wird der Reibschluss zwischen der Rotorwelle 2 und der Hülse 12 gelöst und die Rotorwelle 2 kann einfach von der Hülse 12 entfernt werden. Durch diese Demontage ist es auch möglich, einen einfachen Zugriff auf die Dichteinheit 16 zu ermöglichen, um die Dichteinheit 16 als Ganzes oder einzelne Dichtungsträgerringe bzw. Dichtlippen 20 auszutauschen.

Durch die hier vorgeschlagene Rotorwelleneinheit ist eine einfache Montage und Demontage der Rotorwelleneinheit an einem Hauptrahmen eines Generators möglich. Des Weiteren ist die Herstellung der Rotorwelle vereinfacht, da an dieser kein Flansch zur Befestigung an dem Hauptrahmen gefertigt werden muss.

### Bezugszeichenliste

- 1: Rotorwelleneinheit
- 2: Rotorwelle
- 4: Gehäuse
- 6: Lagereinheiten
- 8: Rotor
- 10: Hauptrahmen
- 12: Hülse
- 14: hydraulische Mutter
- 16: Dichteinheit
- 18: Dichtungsträgerringe
- 20: Dichtlippe
- 22: Dichtscheibe
- 24: Schutzanode
- 26: Ölnut
- 28: Bereich zwischen Hülse und Rotorwelle

## Patentansprüche

1. Rotorwelleneinheit (1) für eine Gezeitenanlage, mit einer Rotorwelle (2), die dazu ausgebildet ist, mit einem Hauptrahmen (10) der Gezeitenanlage verbunden zu werden, und mit zumindest einer Lagereinheit (6) zum Lagern der Rotorwelle (2) in einem Gehäuse (4), wobei das Gehäuse (4) dazu ausgebildet ist, mit einem Rotor (8) der Gezeitenanlage verbunden zu werden,
**dadurch gekennzeichnet, dass** die Rotorwelleneinheit (1) eine Hülse (12) aufweist, die um die Rotorwelle (2) angeordnet und mit der Rotorwelle (2) durch einen Reibschluss verbunden ist, wobei die Hülse (12) an dem Hauptrahmen (10) befestigt ist.

2. Rotorwelleneinheit nach Anspruch 1, wobei der Reibschluss zwischen der Rotorwelle (2) und der Hülse (12) durch einen Kegelsitz realisiert ist.

3. Rotorwelleneinheit nach Anspruch 2, wobei der Außenumfang der Rotorwelle (2) konisch ausgebildet ist und/oder wobei die Innenbohrung der Hülse (12) konisch ausgebildet ist.

4. Rotorwelleneinheit nach einem der vorhergehenden Ansprüche, wobei die Hülse (12) in einer Bohrung des Hauptrahmens (10) angeordnet ist.

5. Rotorwelleneinheit nach einem der vorhergehenden Ansprüche, wobei an einem Ende der Hülse (12) eine hydraulische Mutter (14) zum Erzeugen des Reibschlusses vorgesehen ist.

6. Rotorwelleneinheit nach einem der vorhergehenden Ansprüche, wobei eine Ölnut (26) zwischen der Rotorwelle (2) und der Hülse (12) vorgesehen ist.

7. Rotorwelleneinheit nach einem der vorhergehenden Ansprüche, wobei die Rotorwelleneinheit (1) zumindest eine Dichteinheit (16) aufweist, die um die Rotorwelle (2) angeordnet und zum Abdichten der Lagereinheit (6) in Richtung des Hauptrahmens (10) ausgebildet ist, wobei die Hülse (12) zwischen der Dichteinheit (16) und dem Hauptrahmen (10) angeordnet ist.

8. Rotorwelleneinheit nach Anspruch 7, wobei die Dichteinheit (16) austauschbar ist.

9. Rotorwelleneinheit nach Anspruch 8, wobei die Dichteinheit (16) mehrere Dichtungsträgerringe (18) mit jeweils einer Dichtlippe (20) aufweist.

10. Rotorwelleneinheit nach Anspruch 9, wobei die Dichtungsträgerringe (18) einzeln austauschbar sind.

## Claims

1. Rotor shaft unit (1) for a tidal plant, with a rotor shaft (2) which is configured to be connected to a main frame (10) of the tidal plant, and with at least one bearing unit (6) for mounting the rotor shaft (2) in a housing (4), the housing (4) being configured to be connected to a rotor (8) of the tidal plant, **characterized in that** the rotor shaft unit (1) has a sleeve (12) which is arranged around the rotor shaft (2) and is connected to the rotor shaft (2) by way of a frictionally locking connection, the sleeve (12) being fastened to the main frame (10).

2. Rotor shaft unit according to Claim 1, the frictionally locking connection between the rotor shaft (2) and the sleeve (12) being realised by way of a conical seat.

3. Rotor shaft unit according to Claim 2, the outer circumference of the rotor shaft (2) being of conical configuration and/or the inner bore of the sleeve (12) being of conical configuration.

4. Rotor shaft unit according to one of the preceding claims, the sleeve (12) being arranged in a bore of the main frame (10).

5. Rotor shaft unit according to one of the preceding claims, a hydraulic nut (14) for producing the frictionally locking connection being provided at one end of the sleeve (12).

6. Rotor shaft unit according to one of the preceding claims, an oil groove (26) being provided between the rotor shaft (2) and the sleeve (12).

7. Rotor shaft unit according to one of the preceding claims, the rotor shaft unit (1) having at least one sealing unit (16) which is arranged around the rotor shaft (2) and is configured to seal the bearing unit (6) in the direction of the main frame (10), the sleeve (12) being arranged between the sealing unit (16) and the main frame (10).

8. Rotor shaft unit according to Claim 7, the sealing unit (16) being replaceable.

9. Rotor shaft unit according to Claim 8, the sealing unit (16) having a plurality of seal carrier rings (18) with in each case one sealing lip (20).

10. Rotor shaft unit according to Claim 9, the seal carrier rings (18) being individually replaceable.

## Revendications

1. Unité d'arbre de rotor (1) pour une installation marémotrice, comprenant un arbre de rotor (2), qui est configuré pour être relié à un châssis principal (10) de l'installation marémotrice, et comprenant au moins une unité de palier (6) pour supporter l'arbre de rotor (2) dans un boîtier (4), le boîtier (4) étant configuré pour être reliée à un rotor (8) de l'installation marémotrice,
**caractérisée en ce que** l'unité d'arbre de rotor (1) présente une douille (12), qui est agencée autour de l'arbre de rotor (2) et qui est reliée à l'arbre de rotor (2) par un engagement par friction, la douille (12) étant fixée au châssis principal (10).

2. Unité d'arbre de rotor selon la revendication 1, dans laquelle l'engagement par friction entre l'arbre de rotor (2) et la douille (12) est réalisée par un siège conique.

3. Unité d'arbre de rotor selon la revendication 2, dans laquelle la circonférence extérieure de l'arbre de rotor (2) est configurée sous forme conique et/ou dans laquelle l'alésage intérieur de la douille (12) est configuré sous forme conique.

4. Unité d'arbre de rotor selon l'une quelconque des revendications précédentes, dans laquelle la douille (12) est agencée dans un alésage du châssis principal (10) .

5. Unité d'arbre de rotor selon l'une quelconque des revendications précédentes, dans laquelle un écrou hydraulique (14) est prévu à une extrémité de la douille (12) pour créer l'engagement par friction.

6. Unité d'arbre de rotor selon l'une quelconque des revendications précédentes, dans laquelle une rainure à huile (26) est prévue entre l'arbre de rotor (2) et la douille (12).

7. Unité d'arbre de rotor selon l'une quelconque des revendications précédentes, dans laquelle l'unité d'arbre de rotor (1) présente au moins une unité d'étanchéité (16), qui est agencée autour de l'arbre de rotor (2) et qui est configurée pour rendre étanche l'unité de palier (6) en direction du châssis principal (10), la douille (12) étant agencée entre l'unité d'étanchéité (16) et le châssis principal (10).

8. Unité d'arbre de rotor selon la revendication 7, dans laquelle l'unité d'étanchéité (16) est remplaçable.

9. Unité d'arbre de rotor selon la revendication 8, dans laquelle l'unité d'étanchéité (16) présente plusieurs bagues de support de joint d'étanchéité (18) ayant chacune une lèvre d'étanchéité (20).

10. Unité d'arbre de rotor selon la revendication 9, dans laquelle les bagues de support de joint d'étanchéité (18) sont remplaçables individuellement.
